# EUROPÄISCHE PATENTSCHRIFT

(11) **EP 3 448 653 B1**
(45) Veröffentlichungstag und Bekanntmachung des Hinweises auf die Patenterteilung: **31.03.2021**
(21) Anmeldenummer: 17709084.2
(22) Anmeldetag: 07.03.2017
(51) Int. Cl.: B60K 15/03, B60K 15/04

(54) **EINFÜLLROHR FÜR EINEN KRAFTSTOFFTANK**
FILLER TUBE FOR A FUEL TANK
TUBULURE DE REMPLISSAGE POUR RÉSERVOIR À CARBURANT

(30) Priorität: 29.04.2016 DE 102016207477
(43) Veröffentlichungstag der Anmeldung: 06.03.2019
(73) Patentinhaber: Kautex Textron GmbH & Co. KG, 53229 Bonn (DE)
(72) Erfinder: SCHMITZ, Dieter, 53227 Bonn (DE); SELIG, Daniela, 53179 Bonn (DE); KRÜGER, Claus, 53804 Much (DE); LORENZ, Harald, 53474 Bad Neuenahr-Ahrweiler (DE)
(74) Vertreter: Richly & Ritschel Patentanwälte PartG mbB
(86) Internationale Anmeldenummer: PCT/EP2017/055305
(87) Internationale Veröffentlichungsnummer: WO 2017/186387

(56) Entgegenhaltungen:
- DE-A1- 10 317 407
- DE-A1-102012 022 395
- JP-A- 2005 041 298
- JP-A- 2006 009 850

## Beschreibung

Die Erfindung betrifft ein Einfüllrohr für einen Kraftstofftank, mit einem Rohrabschnitt aus Kunststoff und einem mit dem Rohrabschnitt verbundenen, rohrförmigen Adapter zur Kopplung des Einfüllrohrs mit dem Kraftstofftank. Weiter betrifft die Erfindung ein Tanksystem mit einem solchen Einfüllrohr. Schließlich betrifft die Erfindung ein Verfahren und eine Vorrichtung zum Herstellen eines Einfüllrohrs für einen Kraftstofftank.

Bei der Entwicklung moderner Kraftfahrzeuge besteht die ständige Forderung, die Schadstoffemission weiter zu reduzieren - einerseits, um die immer schärferen gesetzlichen Vorgaben zu erfüllen und andererseits, um den Kundenwünschen nach möglichst umweltschonenden Fahrzeugen Rechnung zu tragen. Im Vordergrund stehen dabei unter anderem die Gewichtsreduktion der Fahrzeuge sowie die zuverlässige Kapselung umweltschädlicher Substanzen, wie z.B. Treib- oder Schmierstoffe.

Vor dem Hintergrund dieser Zielvorgaben bedeutet dies für die Entwicklung von Tanksystemen, die aus einem Kraftstoffbehälter und einem daran angeschlossenen Einfüllrohr zusammengesetzt sind, dass eine möglichst geringe diffusionsbedingte Kraftstoffemission in einem leicht bauenden System realisiert werden soll. Emissionswerte bekannter Tanksysteme liegen bei ca. 20 bis 30 mg pro Tag, d.h. es entweichen diffusionsbedingt ca. 20 bis 30 mg Treibstoff pro Tag aus einem solchen Tanksystem in die Umwelt.

Tanksysteme, die aus einem metallischen Werkstoff hergestellt sind, haben den Vorteil, dass eine geringe Diffusion des Kraftstoffs durch die Wandung des Kraftstoffbehälters bzw. des Einfüllrohrs stattfindet. Zudem lässt sich in einfacher Weise eine gas- und flüssigkeitsdichte Rohrverbindung zwischen einem metallischen Kraftstoffbehälter und einem metallischen Einfüllrohr herstellen, wie zum Beispiel eine Schlauch-Schellen-Verbindung.

Die aus metallischen Werkstoffen hergestellten Tanksysteme haben jedoch den Nachteil, dass sie ein hohes Gewicht aufweisen und teuer in ihrer Herstellung sind. Weiter hat die Schlauch-Schellen-Verbindung den Nachteil, dass die Montage des Einfüllrohrs, insbesondere bei der Reparatur oder Wartung des Tanksystems, aufwendig und zeitintensiv ist, da die Schelle in schwer zugänglichen Bereichen mit eng begrenztem Bauraum befestigt werden muss.

Tanksysteme mit Kunststoffkomponenten, wie z.B. einem Einfüllrohr für einen Kraftstofftank der eingangs genannten Art, haben den Vorteil, dass sie gegenüber Systemen aus Metall leichter sind und zudem kostengünstiger hergestellt werden können. Das Einfüllrohr wird üblicherweise separat von dem Kraftstofftank gefertigt und in einem Montageschritt lösbar mit dem Kraftstofftank verbunden.

Bei der Kopplung eines Einfüllrohrs aus Kunststoff mit einem Kraftstoffbehälter besteht eine besondere Herausforderung darin, eine robuste, auch unter Einsatzbedingungen gas- und flüssigkeitsdichte Verbindung herzustellen. Insbesondere ein im Blasformverfahren hergestelltes Einfüllrohr lässt sich auf Grund der Kriechneigung des Kunststoffs und der diesem Fertigungsverfahren inhärenten Toleranzen nicht unmittelbar derart mit einem Kraftstoffbehälter verbinden, dass die Verbindung für Kohlenwasserstoffe diffusionsdicht ist

In der DE 103 17 407 A1 wird ein gattungsgemäßes Einfüllrohr offenbart.

Ein gattungsgemäßes Verfahren sowie eine gattungsgemäße Vorrichtung zum Herstellen eines Einfüllrohrs offenbart die DE 10 2012 022395 A1.

Um eine zuverlässige Anbindung eines im Blasformverfahren hergestellten Einfüllrohrs an einen Kraftstofftank zu gewährleisten, ist es bekannt, das Einfüllrohr endseitig mit einem Adapter zu versehen, über den eine dichtende Rohrverbindung zu dem Tank hergestellt werden kann. Hierbei wird ein Rohrabschnitt des Einfüllrohrs zunächst in einem Blasformverfahren gefertigt und nach dem Auskühlen und der Entnahme aus der Blasform in einem separaten, an den Kühlvorgang anschließenden Schweißverfahren stirnseitig mit dem Adapter verbunden. Die stirnseitige Verschweißung erfolgt im Stumpfstoß, wobei Heizelemente zum Plastifizieren der zu verschweißenden Stirnseiten verwendet werden. Um die Schweißverbindung zu dem Adapter herzustellen, wird der Rohrabschnitt daher nach dem Auskühlen stirnseitig erneut aufgeschmolzen bzw. plastifiziert.

Das bekannte Verfahren hat den Nachteil, dass die separaten Form- und Schweißverfahren hohe Kosten verursachen und zu langen Prozesszeiten führen. Die radial umlaufende Stumpfschweißnaht hat weiter den Nachteil, dass diese insbesondere gegenüber Zug- und Biegebelastungen eine strukturelle Schwachstelle bildet und in diesem Bereich zudem eine erhöhte Diffusion von Kraftstoff in die Umgebung stattfindet, was die Emissionswerte des Systems aus Kraftstoffbehälter und Einfüllrohr insgesamt erhöht. Die diffusionsbedingte Kraftstoffemission im Bereich der Stumpfschweißnaht beträgt ca. 3 bis 4 mg pro Tag.

Weist das Kunststoffrohr einen mehrschichtigen Aufbau auf, muss im Falle einer stirnseitigen Stumpfschweißnaht die Schweißverbindung über den gesamten Schichtaufbau hinweg hergestellt werden. Dabei kann insbesondere eine Barriereschicht aus EVOH die Qualität der Schweißverbindung beeinträchtigen, da EVOH nur eingeschränkt bzw. nicht mit Kunstoffen wie HDPE oder dergleichen verschweißbar ist.

Vor diesem Hintergrund liegt der Erfindung die technische Problemstellung zugrunde, ein Einfüllrohr für einen Kraftstofftank, ein Tanksystem mit einem solchen Einfüllrohr, sowie ein Verfahren und eine Vorrichtung zur Herstellung eines Einfüllrohrs anzugeben, wobei das Einfüllrohr kostengünstig herstellbar ist und insbesondere erhöhten Emissionsanforderungen genügt.

Die technische Problemstellung wird durch ein Einfüllrohr gemäß Anspruch 1, ein Tanksystem nach Anspruch 6, ein Verfahren nach Anspruch 7 sowie eine Vorrichtung nach Anspruch 12 gelöst.

Eine überlappende Anordnung im Bereich des Adapters des Einfüllrohrs bedeutet vorliegend, dass der Adapter und der Rohrabschnitt wenigstens abschnittsweise, beispielsweise endseitig, ineinandergreifen bzw. ineinandergeschoben sind. Mit anderen Worten können der Adapter und der Rohrabschnitt zumindest im Bereich der stoffschlüssigen Verbindung eine gemeinsame Längsachse aufweisen, wobei der Adapter axial in den Rohrabschnitt ragt, oder umgekehrt.

Eine innere Mantelfläche des Rohrabschnitts ist im Bereich der Überlappung folglich einer äußeren Mantelfläche des Adapters zugewandt, oder umgekehrt, wobei die Mantelflächen durch die stoffschlüssige Verbindung in radialer Richtung spiel- und spaltfrei miteinander verbunden sind bzw. ineinander übergehen.

Wenn vorliegend von einer inneren Mantelfläche gesprochen wird, so handelt es sich dabei um eine Fläche, die einer gemeinsamen Längsachse von Adapter und Rohrabschnitt zugewandt ist, während eine äußere Mantelfläche von der Längsachse abgewandt orientiert ist.

Eine axiale Richtung erstreckt sich vorliegend entlang einer wenigstens im Bereich der stoffschlüssigen Verbindung gebildeten gemeinsamen Längsachse des Adapters und des Rohrabschnitts, während eine radiale Richtung quer zur axialen Richtung, von der Längsachse wegweisend orientiert ist.

Entgegen vorbekannter Lösungen werden der Adapter und der Rohrabschnitt folglich nicht stirnseitig im Stumpfstoß verbunden, sondern sind im Bereich der stoffschlüssigen Verbindung axial ineinandergeschoben, sodass einander zugewandte Mantelflächen von Adapter und Rohrabschnitt stoffschlüssig miteinander verbunden werden können, insbesondere verschweißt.

Es hat sich gezeigt, dass durch die stoffschlüssige Verbindung der Mantelflächen die diffusionsbedingte Treibstoffemission des Einfüllrohrs im Bereich der Verbindungsstelle von Rohrabschnitt und Adapter verringert werden kann. Dies lässt sich einerseits damit begründen, dass der Bereich der stoffschlüssigen Verbindung in radialer Richtung betrachtet zweiseitig von dem Adapter und dem Rohrabschnitt eingefasst ist. Weiter kann die axiale Länge des Diffusionspfads entlang der stoffschlüssigen Verbindung durch die Länge der Überlappung von Adapter und Rohrabschnitt eingestellt und vor dem Hintergrund vorgegebener Emissionswerte optimiert werden. Die Verbindung der Mantelflächen hat weiter den Vorteil, dass eine gegebenenfalls in den Rohrabschnitt eingebundene Barriereschicht nicht Teil der Schweißverbindung ist. So können mithilfe des erfindungsgemäßen Einfüllrohrs Emissionswerte kleiner oder gleich 2 mg pro Tag in dem Bereich der stoffschlüssigen Verbindung erreicht werden.

Die stoffschlüssige Verbindung der Mantelflächen hat zudem den Vorteil, dass beispielsweise im Vergleich zu Verschweißungen im Stumpfstoß eine höhere Festigkeit gegenüber statischen und dynamischen Betriebslasten, insbesondere Zug- und/oder Biegebeanspruchungen, gegeben ist.

Das erfindungsgemäße Einfüllrohr hat weiter den Vorteil, dass der Verbindungsschritt zwischen dem Adapter und dem Rohrabschnitt in einen Blasformprozess integriert werden kann.

Wie nachstehend noch im Detail für das erfindungsgemäße Verfahren dargelegt, kann beispielsweise der Adapter auf einem Blas- oder Kalibrierdorn einer Blasformvorrichtung gehalten und stirnseitig in einen Rohrabschnitt oder einen Vorformling zum Herstellen des Rohrabschnitts eingeführt werden. Im Zusammenwirken mit dem Blas- oder Kalibrierdorn kann der Adapter den Vorformling zum Ausformen des Rohrabschnitts gasdicht abschließen. Die stoffschlüssige Verbindung zwischen dem Adapter und dem Blasdorn kann beispielsweise durch ein Andrücken der zuvor plastifizierten bzw. zumindest teilweise aufgeschmolzenen Mantelflächen von Adapter und Rohrabschnitt mittels einer Verbindungseinrichtung erfolgen, die Teil der Blasformvorrichtung sein kann.

Die Anbindung des Adapters kann daher bereits erfolgen, während der Rohrabschnitt noch in dem Blasformwerkzeug gehalten ist. Insbesondere kann ein Verschweißen zwischen dem Adapter und dem Rohrabschnitt in der formgebenden Wärme erfolgen, d.h. der Energie- oder Wärmeeintrag aus einem vorangehenden Extrusions- und/oder Blasformschritt kann in dem Verbindungsschritt ausgenutzt werden.

Die überlappende Bauteilstruktur ermöglicht es, das Einfüllrohr in kürzerer Zeit und unter geringerem Anlagen- und Energieaufwand herzustellen, so dass die Fertigung im Vergleich zu vorbekannten Lösungen kostengünstiger ist.

Insgesamt wird damit ein Einfüllrohr für einen Kraftstofftank bereitgestellt, das durch die stoffschlüssige Verbindung der Mantelflächen des Adapters und des Rohrabschnitts in einem Überlappungsbereich kostengünstig herstellbar ist und im Bereich der stoffschlüssigen Verbindung insbesondere Emissionswerten kleiner oder gleich 2 mg pro Tag erreichen kann.

Vorteilhafte Ausgestaltungen des Einfüllrohrs ergeben sich aus den abhängigen Ansprüchen und der nachstehenden Beschreibung.

Gemäß einer Weiterbildung des Einfüllrohrs umschließt der Rohrabschnitt den Adapter im Bereich der stoffschlüssigen Verbindung umfangsseitig. Dieser Anordnung begünstigt die Integration des Verbindungsschritts zwischen dem Adapter und dem Rohrabschnitt in einen Blasformprozess. So kann der Rohrabschnitt, bzw. ein Vorformling zur Herstellung des Rohrabschnitts, durch eine Beaufschlagung mit einem Innendruck im plastifizierten Zustand offengehalten oder aufgeweitet werden, um den Adapter stirnseitig einzuführen. Die Verbindung kann anschließend durch ein radial nach innen gewandtes Deformieren und Andrücken des Rohrmaterials gegen die Außenkontur bzw. äußere Mantelfläche des Adapters erfolgen. Daher kann in einfacher Weise ein separat vorgefertigter Adapter innerhalb einer Blasformeinrichtung mit dem Rohrabschnitt verbunden werden, wobei die Blasformvorrichtung eine Verbindungseinrichtung zum Verbinden des Rohrabschnitts mit dem Adapter hat.

Gemäß der Erfindung ist der Adapter aus wenigstens zwei Werkstoffkomponenten hergestellt. Eine Komponente ist dabei zur strukturellen Aussteifung des Adapters vorgesehen sein, während die zweite Komponente zum Ausbilden der stoffschlüssigen Verbindung mit dem Rohrabschnitt vorgesehen ist.

Der Adapter kann einen Grundkörper haben, der aus einem Metall oder einem Kunststoff, insbesondere faserverstärktem Kunststoff, hergestellt ist. Der Grundkörper kann beispielsweise aus Aluminium oder einem faserverstärken, modifizierten Polyamid gefertigt werden. Der Adapter kann in dem zur Anbindung des Rohrabschnitts vorgesehenen Bereich mit einem weiteren Werkstoff, insbesondere HDPE, umspritzt und/oder beschichtet sein. Der zweite Werkstoff ist zum Verkleben und/oder Verschweißen mit dem Werkstoff des Rohrabschnitts vorgesehen. Der zweite Werkstoff kann mit einer Schichtdicke von bis zu 5 mm aufgebracht sein. Bevorzugt beträgt die Schichtdicke des zweiten Werkstoffs maximal 1 mm, um eine zuverlässige Verbindung zu erreichen, insbesondere durch Verschweißen.

Die Mantelfläche des Adapters ist im Bereich der stoffschlüssigen Verbindung aus einem mit dem Kunststoff des Rohrabschnitts verschweißbaren Kunststoff, wie HDPE oder dergleichen, gebildet.

Insbesondere ein die zu verbindende Mantelfläche umfassender Bereich des Adapters kann daher einen thermoplastischen Kunststoff, wie HDPE oder dergleichen, aufweisen. Auf diese Weise kann der Adapter im Bereich der zu verbindenden Mantelfläche lokal aufgeschmolzen bzw. plastifiziert werden, um eine stoffschlüssige Verbindung zu dem Rohrabschnitt herzustellen. Dabei ist es insbesondere vorteilhaft, wenn der Adapter und der Rohrabschnitt thermoplastische Kunststoffe aufweisen, die im Sinne einer Verschweißbarkeit kompatibel sind.

Der Adapter kann Formelemente oder Funktionsflächen zum Ausbilden einer gas- und/oder flüssigkeitsdichten Verbindung zu einem Kraftstoffbehälter aufweisen. So kann der Adapter beispielsweise zu einem an einem Kraftstoffbehälter vorgesehenen Anschlussbereich komplementäre Rastelemente und/oder Dichtflächen aufweisen.

Um in einfacher Weise eine zuverlässige stoffschlüssige Verbindung, insbesondere Verschweißung, zwischen dem Adapter und dem Rohrabschnitt herstellen zu können, kann der Rohrabschnitt aus dem gleichen Material hergestellt sein, welches der Adapter seinerseits im Bereich seiner zu verbindenden Mantelfläche aufweist. Dabei kann es sich beispielsweise um einen durch Blasformen verarbeitbaren, thermoplastischen Kunststoff handeln.

Gemäß einer weiteren Ausgestaltung des Einfüllrohrs kann vorgesehen sein, dass der Rohrabschnitt aus einem von dem die zu verbindende Mantelfläche des Adapters umfassenden Bereich verschiedenen Material hergestellt ist. Bevorzugt sind die Materialien des Rohrabschnitts und des Bereichs, der die zu verbindende Mantelfläche des Adapters umfasst, miteinander verschweißbar.

Der Adapter und der Rohrabschnitt können entsprechend einer vorteilhaften Weiterbildung des Einfüllrohrs im Bereich der stoffschlüssigen Verbindung eine im Wesentlichen kreiszylindrische und/oder eine im Wesentlichen konische Form aufweisen. Es kann vorgesehen sein, dass der Bereich der stoffschlüssigen Verbindung einen im Wesentlichen kreiszylindrischen Abschnitt aufweist, an den sich ein im Durchmesser radial aufweitender konischer Abschnitt anschließt. Die kreiszylindrische Form hat den Vorteil, dass die Mantelflächen von Rohrabschnitt und Adapter in einfacher Weise zwischen einem Blas- oder Kalibrierdorn und in einer Verbindungseinrichtung vorgesehenen Schiebereinsätzen radial aneinandergedrückt werden können. Dabei kann eine zwischen den Mantelflächen gebildete, kreisrund umlaufende stoffschlüssige Verbindung bevorzugt mit einer einzelnen Hubbewegung bzw. durch bereits einmaliges Zustellen der Schiebereinsätze erreicht werden. Dies gilt gleichermaßen für eine konische Ausgestaltung des Bereichs der stoffschlüssigen Verbindung. Die konische oder kreiszylindrische Form ermöglichen daher eine einfache Verfahrensführung und Maschinenkinematik.

Alternativ oder ergänzend kann der Adapter in einem dem Rohrabschnitt abgewandten Bereich einen zu dem Bereich der stoffschlüssigen Verbindung identischen oder kleineren Querschnitt haben, um die Strömungsgeschwindigkeit einer durchzuleitenden Flüssigkeit vorzugeben oder zu erhöhen.

Der Adapter kann in einem Längsschnitt zumindest abschnittsweise einen im Wesentlichen konischen Querschnitt haben und/oder nach Art eines Stufenzylinders geformt sein. Alternativ oder ergänzend kann der Adapter zumindest abschnittsweise zylindrisch, insbesondere kreiszylindrisch, geformt sein und/oder in einem dem Rohrabschnitt abgewandten Bereich einen größeren Querschnitt aufweisen als im Bereich der stoffschlüssigen Verbindung.

Der Adapter kann einen ersten Bereich haben, der zur Anbindung des Rohrabschnitts ausgelegt ist und einen zweiten Bereich aufweisen, der zur mechanischen Kopplung des Adapters mit einem Kraftstofftank vorgesehen ist, wobei der zweite Bereich insbesondere einen größeren Durchmesser aufweisen kann, als der erste Bereich.

Beispielsweise kann der Adapter wenigstens zwei, bevorzugt wenigstens drei, kreiszylindrische Abschnitte unterschiedlichen Durchmessers haben, die jeweils über konische Übergänge miteinander verbunden sind. Während ein erster kreiszylindrischer Abschnitt die Mantelfläche zur Anbindung des Rohrabschnitts umfasst, kann ein zweiter kreiszylindrischer Abschnitt zur Anlage eines Manipulations- oder Schneidwerkzeugs dienen, dass zur Handhabung des Adapters und/oder zum Abtrennen von überschüssigem Rohrmaterial im Bereich der Verbindungsstelle dient.

Alternativ oder ergänzend kann der Adapter wenigstens eine stirnseitige Fase aufweisen. Die Fase kann bevorzugt nach Art einer Montagefase geformt sein, um ein Einführen des Adapters in den Rohrabschnitt zu begünstigen und eine gegebenenfalls während der axialen Relativbewegung zwischen dem Adapter und dem Rohrabschnitt ausgebildete Fluidströmung, wie Druckluft oder dergleichen, zuverlässig zwischen dem Adapter und dem Rohrabschnitt hindurch zu leiten.

Gemäß einem weiteren Aspekt betrifft die Erfindung ein Tanksystem für ein Kraftfahrzeug, mit einem Kraftstofftank bzw.-behälter, und einem Einfüllrohr, wobei das Einfüllrohr in voranstehend beschriebener Weise gebildet ist und wobei der Adapter lösbar mit dem Kraftstofftank verbunden ist, insbesondere durch eine Klemm-, Rast- oder Schnappverbindung.

Ein solcher Kraftstofftank zeichnet sich aufgrund der voranstehend beschriebenen vorteilhaften Ausgestaltung der Verbindung zwischen dem Rohrabschnitt und dem Adapter durch besonders geringe Emissionswerte aus. Insbesondere können die Emissionswerte der gegenständlichen stoffschlüssigen Verbindung kleiner oder gleich 2 mg pro Tag sein.

Durch die bevorzugt vorgesehene Klemm-, Rast- oder Schnappverbindung kann die Montage des Einfüllrohrs an dem Kraftstofftank vereinfacht werden, wobei insbesondere für den Reparatur- bzw. Wartungsfall eine vereinfachte Montage ermöglicht werden kann.

Nach einem weiteren Aspekt betrifft die Erfindung ein Verfahren zum Herstellen eines Einfüllrohrs für einen Kraftstofftank, gemäß Anspruch 7.

Das voranstehend beschriebene Verfahren hat den Vorteil, dass das stoffschlüssige Verbinden des Adapters mit dem Rohrabschnitt unmittelbar in den Blasformprozess integriert werden kann. So kann beispielsweise durch das Bereitstellen des Adapters und/oder das stoffschlüssige Verbinden des Adapters mit dem Rohrabschnitt das Schlauchinnere gasdicht zur Umgebung abgeschlossen werden und der Rohrabschnitt durch eine Beaufschlagung mit Innendruck bzw. eine weitere Erhöhung des Innendrucks in seine finale Form mit im Wesentlichen vollflächiger Anlage an dem Werkzeug gebracht werden.

Das Verfahren hat zudem den Vorteil, dass durch die mögliche Integration des Verbindungsschritts zwischen dem Adapter und dem Rohrabschnitt in den Blasformprozess ein separates, der Herstellung des Rohrabschnitts nachgeschaltetes Verbindungsverfahren überflüssig wird.

Mit dem erfindungsgemäßen Verfahren kann ein voranstehend beschriebenes, erfindungsgemäßes Einfüllrohr für einen Kraftstofftank hergestellt werden. Weitere vorteilhafte Ausgestaltungen des Verfahrens ergeben aus den abhängigen Ansprüchen und der nachstehenden Beschreibung.

Die Verbindungseinrichtung kann bewegliche Elemente zu radialen Andrücken des Rohrabschnitts an den Adapter, oder umgekehrt, umfassen. Die Verbindungseinrichtung kann an dem Blasformwerkzeug oder einem Strukturbauteil, das einen Blas- und/oder Kalibrierdorn trägt, befestigt sein. Die Verbindungseinrichtung kann mehrteilig ausgeführt sein.

Der Adapter kann folglich relativ zu dem Rohrabschnitt bewegbar bereitgestellt werden, so dass der Adapter einem in der Kavität zum Blasformen aufgenommenen Rohrabschnitt zugeführt werden kann. Dabei kann ein Endabschnitt des Rohrabschnitts aus der Kavität des Blasformwerkzeugs in einen Verbindungsbereich ragen, in dem die Verbindungseinrichtung den Adapter und den Endabschnitt des Rohrs verbindet, insbesondere verschweißt und/oder verklebt.

Insbesondere kann der Adapter auf einem Blas- und/oder Kalibrierdorn gehalten sein. Der Dorn kann daher dem Zuführen eines Fluids zur Druckbeaufschlagung des Inneren des Rohrabschnitts, wie z.B. Druckluft, und/oder dem Kalibrieren eines Durchmessers des Adapters und/oder des Rohrabschnitts dienen. Das Verfahren kann daher in einer bereits bestehenden Anlage zum Blasformen durchgeführt werden, wobei ein zur Aufnahme des Adapters modifizierter oder geeigneter Dorn eingesetzt werden kann.

Der Adapter kann im Zusammenwirken mit dem Dorn zum gasdichten Abschließen des Schlauchinneren vorgesehen sein, so dass, sobald der Adapter relativ zu dem Rohrabschnitt seine vorgesehene Position erreicht hat, die finale Formgebung des Rohrabschnitts durch Blasformen und das stoffschlüssige Verbinden stattfinden können.

Um die axial überlappende Positionierung des Adapters und des Rohrabschnitts zu erleichtern, kann nach einer Weiterbildung des Verfahrens während des Einführens des Adapters in den Rohrabschnitt eine Fluidströmung zwischen den zu verbindenden Mantelflächen erzeugt werden, um einen Spalt, insbesondere einen Luftspalt, zwischen den Mantelflächen auszubilden. Bei dem Fluid kann es sich um Druckluft handeln, die insbesondere mithilfe eines Blasdorns zugeführt werden kann.

Mithilfe der Fluidströmung kann eine Auftulpung bzw. Aufweitung des Rohrabschnitts erfolgen, so dass während einer axialen Relativbewegung der zu verbindenden Mantelflächen, beispielsweise des Adapters zu dem Rohrabschnitt, kein Kontakt zwischen den zu verbindenden Mantelflächen besteht. Mit anderen Worten werden die zu verbindenden Mantelflächen von Adapter und Rohrabschnitt während des stirnseitigen Einführens des Adapters in den Rohrabschnitt durch die Fluidströmung radial auf Abstand gehalten, so dass kein wechselseitiges Verkleben oder Anhaften der Mantelflächen während des Zuführvorgangs stattfindet. Für den Fall, dass die miteinander zu verbindenden Mantelflächen jeweils eine im Wesentlichen kreiszylindrische Form aufweisen, kann es sich bei dem Spalt um einen zwischen den Mantelflächen im Wesentlichen kreisrund umlaufenden Luftspalt handeln.

Das stoffschlüssige Verbinden der Mantelflächen im Verfahrensschritt c) kann dadurch erreicht werden, dass die Schritte
- Plastifizieren wenigstens einer der Mantelflächen durch Energie- oder Wärmeeintrag; und
- Andrücken der Mantelfläche des Adapters an die Mantelfläche des Rohrabschnitts, oder umgekehrt;
durchgeführt werden.

Das Plastifizieren der Mantelfläche des Adapters kann dabei durch Infrarotstrahlung oder Heißluft erfolgen, während die Mantelfläche des Rohrabschnitts noch aus dem vorangeschalteten Extrusionsprozess in einem schweißfähigen, plastischen Zustand sein kann. Auch der Mantelfläche des Rohrabschnitts kann ergänzend zur Restwärme aus dem Extrusionsprozess zusätzlich Wärme zugeführt werden, insbesondere durch eine zum Plastifizieren der Mantelfläche des Adapters vorgesehene Energie- oder Wärmequelle. Durch das anschließende Andrücken der Mantelflächen wird die stoffschlüssige Verbindung zwischen den Mantelflächen gebildet - die Mantelflächen werden miteinander verschweißt.

Gemäß einer Weiterbildung des Verfahrens werden der Adapter und der Rohrabschnitt durch radiales Zufahren wenigstens zweier Schiebereinsätze, die Teil der Verbindungseinrichtung sind, aneinandergedrückt, wobei der Adapter insbesondere auf einem Dorn, wie einem Blas- und/oder Kalibrierdorn, gehalten ist, so dass der Adapter und der Rohrabschnitt zwischen den Schiebereinsätzen und dem Dorn radial aneinandergedrückt werden.

Um im Bereich der stoffschlüssigen Verbindung eine vollflächige Anlage der zu verbindenden Mantelflächen über der gesamten Breite des vorzusehenden Verbindungsbereichs zu erreichen, kann der Rohrabschnitt den Adapter axial über die zur Ausbildung der stoffschlüssigen Verbindung vorgesehene Mantelfläche des Adapters hinweg überlappen, sodass nach dem Ausbilden der stoffschlüssigen Verbindung überschüssiges Rohrmaterial an dem Einfüllrohr anhaftet.

Zum Entfernen von überschüssigem Rohrmaterial können die Verfahrensschritte
- Bereitstellen eines den Adapter umfangsseitig umgreifenden Schneidwerkzeugs; und
- Abtrennen von überschüssigem Rohrmaterial mittels des Schneidwerkzeugs, wobei das Schneidwerkzeug insbesondere zweiteilig gebildet ist;
vorgesehen sein.

Das Schneidwerkzeug kann aus zwei Halbschalen gebildet sein, die umfangsseitig einen Absatz oder eine Zylinderstufe des Adapters umgreifen, wobei der Absatz oder die Zylinderstufe einen größeren Durchmesser aufweisen, als der Durchmesser des Adapters im Bereich seiner zum Ausbilden der stoffschlüssigen Verbindung vorgesehenen Mantelfläche.

Gemäß einem weiteren Aspekt betrifft die Erfindung eine Vorrichtung nach Anspruch 12, zum Herstellen eines Einfüllrohrs für einen Kraftstofftank.

Die Vorrichtung ist somit einerseits zum Herstellen des Rohrabschnitts durch Blasformen vorgesehen und andererseits dazu geeignet, eine stoffschlüssige Verbindung zwischen den Mantelflächen von Adapter und Rohrabschnitt herzustellen. Mit der erfindungsgemäßen Vorrichtung kann ein erfindungsgemäßes Einfüllrohr schnell und kostengünstig hergestellt und das erfindungsgemäße Verfahren durchgeführt werden. Vorteilhafte Weiterbildungen der Vorrichtung ergeben sich aus den abhängigen Ansprüchen und der nachstehenden Beschreibung.

Nach einer Weiterbildung weist die Vorrichtung ein Schneidwerkzeug zum Abtrennen von überschüssigem Rohrmaterial auf, wobei das Schneidwerkzeug insbesondere zweiteilig gebildet ist. Neben dem Ausformen und dem Verbinden des Rohrabschnitts kann die Vorrichtung daher zudem zur Nachbearbeitung der Verbindungsstelle eingerichtet sein, so dass der Vorrichtung bevorzugt ein fertiges Endprodukt entnommen werden kann.

Nach einer Weiterbildung der Vorrichtung weist das Schneidwerkzeug eine Haltefläche, die zur umfangsseitigen Anlage an dem Adapter vorgesehen ist, und eine Trennfläche, die zur Anlage an der Verbindungseinrichtung vorgesehen ist, auf, wobei die Haltefläche und die Trennfläche insbesondere unter einem spitzen Winkel zu einer Schneidkante zusammenlaufen.

Die Verbindungseinrichtung kann eine Anlagefläche aufweisen, die zur Trennfläche des Schneidwerkzeugs im Wesentlichen komplementär geformt sein kann, oder eine stirnseitige Anlage der Schneidkante ermöglicht. Durch eine axiale Bewegung des Schneidwerkzeugs in Richtung der Verbindungseinrichtung kann die Anlagefläche mit der Trennfläche oder der Schneidkante in Anlage gebracht werden kann, insbesondere zum Abtrennen von überschüssigem Rohrmaterial.

Nachfolgend wird die Erfindung anhand einer Ausführungsbeispiele darstellenden Zeichnung näher beschreiben. Es zeigen jeweils schematisch:
- Fig. 1A: ein Einfüllrohr für einen Kraftstofftank in einer perspektivischen Ansicht;
- Fig. 1B: das Einfüllrohr aus Fig. 1A in einem Längsschnitt;
- Fig. 2A: einen Adapter für ein Einfüllrohr in einem Längsschnitt;
- Fig. 2B: einen weiteren Adapter für ein Einfüllrohr in einem Längsschnitt;
- Fig. 3A: einen Blasdorn und ein Schneidwerkzeug zur Aufnahme eines Adapters;

- Fig. 3B: der Blasdorn und das Schneidwerkzeug aus Fig. 3A mit einem Adapter;
- Fig. 4A: eine Blasform im Querschnitt in einer ersten Position;
- Fig. 4B: die Blasform aus Fig. 4A in einer zweiten Position;
- Fig. 5A-5G: eine Vorrichtung zum Herstellen eines Einfüllrohrs in einem Querschnitt;
- Fig. 6A: eine weitere Vorrichtung zum Herstellen eines Einfüllrohrs in einem Querschnitt in einer ersten Position;
- Fig. 6B: die Vorrichtung aus Fig. 6A in einer zweiten Position.
- Fig. 7A-7D: eine weitere Vorrichtung zum Herstellen eines Einfüllrohrs in einem Querschnitt.

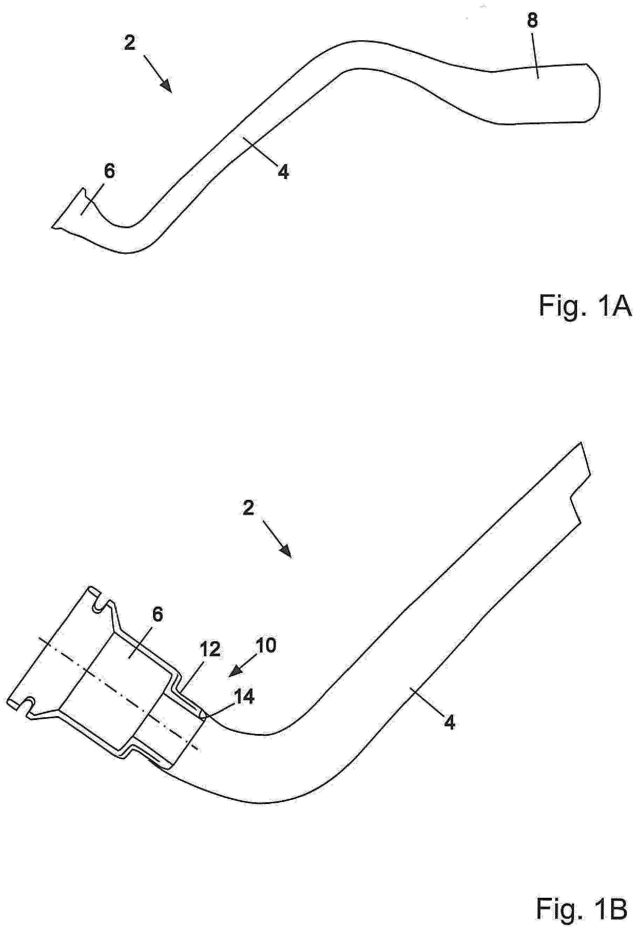

Fig. 1A zeigt ein Einfüllrohr 2 für einen Kraftstofftank (nicht dargestellt). Das Einfüllrohr 2 hat einen Rohrabschnitt 4 aus Kunststoff. Vorliegend ist der Rohrabschnitt 4 aus einem thermoplastischen Kunststoff hergestellt worden. Der Rohrabschnitt 4 kann einlagig aus einem Kunststoff hergestellt sein. Der Rohrabschnitt 4 kann alternativ mehrlagig aus einem koextrudierten Schlauchmaterial hergestellt sein, das innerhalb einer Blasform durch Innendruckbeaufschlagung ausgeformt worden ist. Der Rohrabschnitt 4 kann durch den Blasformprozess in wenigstens zwei Raumrichtungen gebogen ausgeformt werden.

Das Einfüllrohr 2 hat einen rohrförmigen Adapter 6, der mit dem Rohrabschnitt 4 verbunden ist. Der Adapter 6 dient der Kopplung des Einfüllrohrs 2 mit dem Kraftstofftank. An einem dem Adapter 6 entgegengesetzten Endabschnitt 8 des Einfüllrohrs 2 ist der Rohrabschnitt 4 im Durchmesser vergrößert ausgeführt, wobei dieser vergrößerte Endabschnitt 8 im fertig montierten Zustand einem Einfüllkopf zum Zuführen von Kraftstoff in einem Kraftfahrzeug zugeordnet ist.

In Fig. 1B ist der adapterseitige Teil des Einfüllrohrs 2 aus Fig. 1A in einem Längsschnitt dargestellt. Der Rohrabschnitt 4 und der Adapter 6 sind in einem Bereich 10 stoffschlüssig miteinander verbunden, wobei in dem vorliegenden Fall eine äußere Mantelfläche 12 des Adapters 6 mit einer inneren Mantelfläche 14 des Rohrabschnitts 4 verschweißt ist. Der Adapter 6 und der Rohrabschnitt 4 sind im Bereich 10 der stoffschlüssigen Verbindung überlappend angeordnet. Vorliegend umgreift der Rohrabschnitt 4 den Adapter 6 im Bereich 10 der stoffschlüssigen Verbindung umfangsseitig. Mit anderen Worten sind der Adapter 6 und der Rohrabschnitt 4 im Bereich 10 der stoffschlüssigen Verbindung axial ineinandergeschoben bzw. ineinander verschachtelt angeordnet.

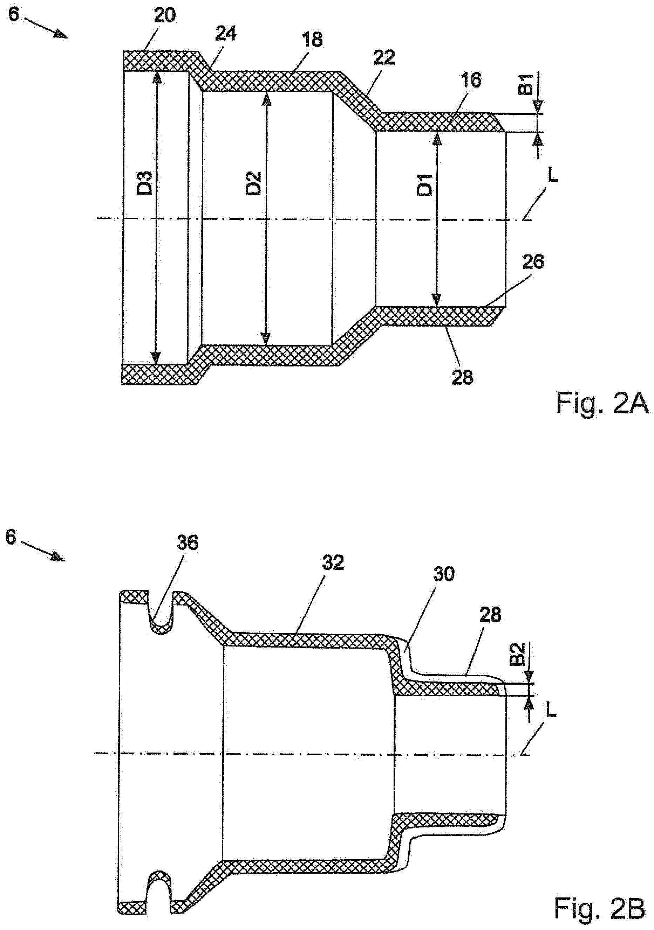

Fig. 2A zeigt eine Ausgestaltung eines Adapters 6 für ein Einfüllrohr 2 in einem Längsschnitt entlang einer Längsachse L. Der Adapter 6 ist nach Art eines Stufenzylinders geformt und weist drei kreiszylindrisch ausgebildete Abschnitte 16, 18, 20 mit den Durchmessern D1, D2, D3 auf. Der Durchmesser D1 kann beispielsweise 32 mm, Durchmesser D2 38 mm und Durchmesser D3 44 mm betragen. Es versteht sich, dass die voranstehend genannten und alle nachfolgend gezeigten Zahlenwerte lediglich exemplarisch zu verstehen sind und die einzelnen Komponenten in ihren Dimensionen an den jeweiligen Anwendungsfall angepasst werden können. Die Wanddicke B1 des Adapters 6 aus Fig. 2A kann beispielsweise ca. 2,5 mm betragen.

Der Abschnitt 16 mit dem Durchmesser D1 ist über den konischen Abschnitt 22 mit dem Abschnitt 18, der den Durchmesser D2 hat, verbunden. Der Abschnitt 18 ist seinerseits über den konischen Abschnitt 24 mit dem Abschnitt 20 verbunden, der den Durchmesser D3 hat.

Der Adapter 6 weist eine innere Mantelfläche 26, die der Längsachse L zugewandt ist, und eine äußere Mantelfläche 28 die der Längsachse L abgewandt ist, auf. Der Teil der äußeren Mantelfläche 28, in dem der Abschnitt 16 und der konische Abschnitt 22 gebildet sind, ist zum Ausbilden einer stoffschlüssigen Verbindung mit dem Rohrabschnitt 4 vorgesehen. Der Adapter 6 gemäß Fig. 2A ist aus einem Monowerkstoff hergestellt, der mit einem Rohrabschnitt 4 verschweißbar ist.

Fig. 2B zeigt einen weiteren Adapter 6 für ein Einfüllrohr 2 in einem Längsschnitt. Der in Fig. 2B gezeigte Adapter 6 ist aus zwei Kunststoffkomponenten hergestellt.

Ein Grundkörper 32 des Adapters 6 besteht aus einem faserverstärktem Polyamid. Der Grundkörper 32 ist in einem Bereich 30 mit einer zweiten Kunststoffkomponente beschichtet bzw. umspritzt. Der Bereich 30, der die zu verbindende Mantelfläche 28 umfasst, besteht aus modifiziertem HDPE, das zum Verschweißen mit dem Werkstoff des Rohrabschnitts 4 geeignet ist. Der Bereich 30 ist vorliegend eine Schicht aus modifiziertem HDPE. Der Adapter 6 aus Fig. 2B ist somit zweilagig gebildet. Die Wanddicke B2 des Adapters 6 beträgt vorliegend 2,5 mm +/- 0,1 mm. Die Dicke der Schicht 30 aus HDPE weist eine Schichtdicke von maximal 1 mm auf. In weiteren Ausführungsformen der Erfindung kann vorgesehen sein, dass die Dicke der Schicht 30 weniger als 1 mm oder bis zu einschließlich 5 mm beträgt.

Während das modifizierte HDPE des Bereichs 30 zur stoffschlüssigen Anbindung des Adapters 6 an den Rohrabschnitt 4 dient, ist der Grundkörper 32 aus faserverstärktem Kunststoff für die Formstabilität des Bauteils vorgesehen und dient zudem der lösbaren Kopplung des Adapters 6 mit einem Kraftstofftank (nicht dargestellt). Hierzu hat der Adapter 6 Formelemente 36, die zum Ausbilden einer Klemm-, Rast- oder Schnappverbindung mit an dem Kraftstofftank gebildeten, komplementär geformten Formelementen und/oder Dichtungselementen vorgesehen sind. Vorliegend weist der Adapter 6 eine kreisrund umlaufende Nut 36 auf, die zum Zusammenwirken mit Formelementen des Kraftstofftanks vorgesehen ist.

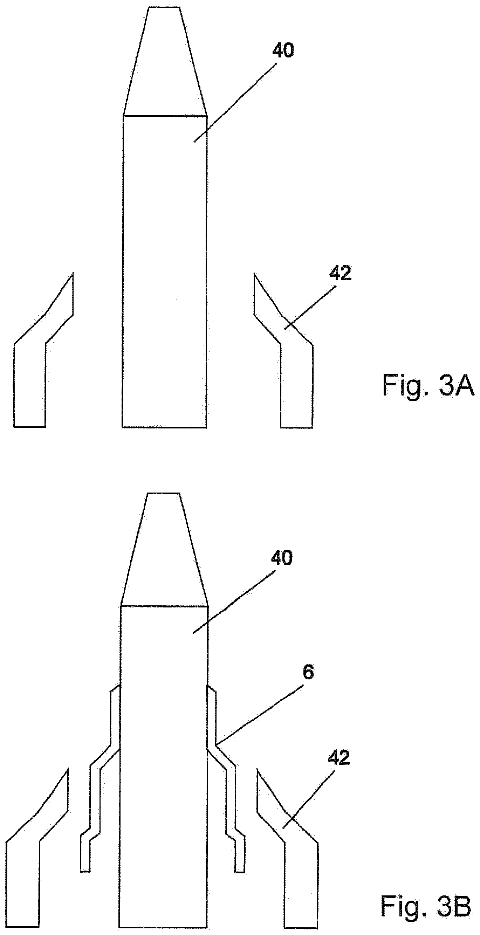

Fig. 3A zeigt einen Blasdorn 40 und ein Schneidwerkzeug 42. Der Blasdorn 40 ist zur Aufnahme des Adapters 6 aus Fig. 2A oder Fig. 2B vorgesehen, wie in Fig. 3B für den Adapter 6 aus Fig. 2A exemplarisch dargestellt.

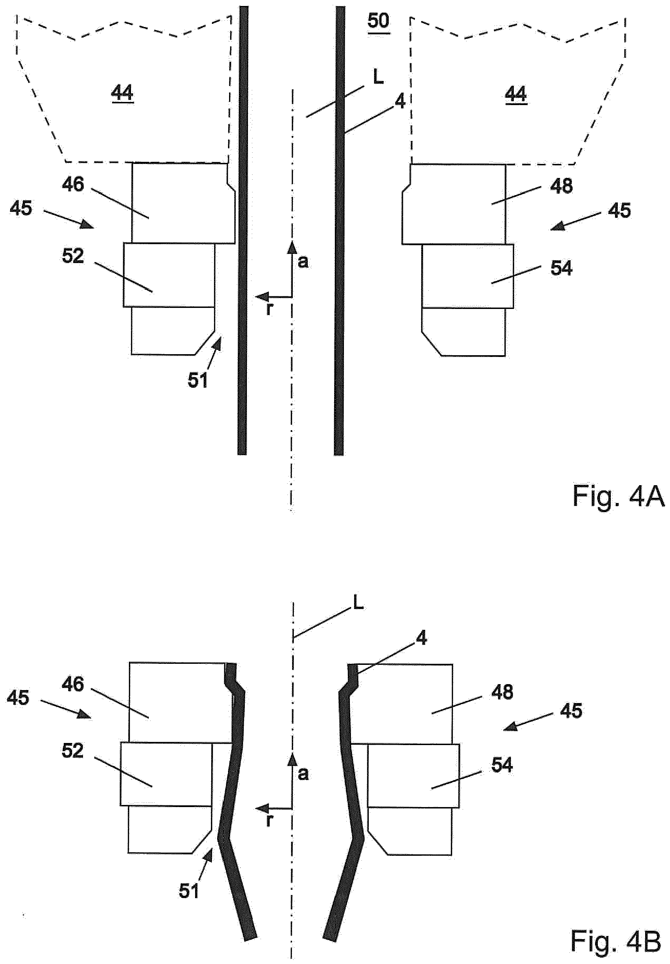

In Fig. 4A ist ein zweiteiliges Werkzeug 44 zum Blasformen, die Blasform 44, dargestellt. Die Formhälften der Blasform 44 bilden eine Kavität 50, die zum Ausformen des Rohrabschnitts 4 vorgesehen ist.

Weiter ist eine Verbindungseinrichtung 45 vorgesehen, die Werkzeughälften 46, 48 und Schiebereinsätze 52, 54 aufweist, die zum Andrücken des Rohrabschnitts 4 an den Adapter 6 vorgesehen sind. Die Werkzeughälften 46, 48 sind an den Formhälften der Blasform 44 befestigt.

Der Rohrabschnitt 4 wird zunächst schlauchförmig durch ein vorgelagertes Extrusionsverfahren bereitgestellt, wie in Fig. 4A dargestellt. In Fig. 4A befinden sich die Blasform 44 sowie die Schiebereinsätze 52, 54 in einer geöffneten Position. In dieser Position kann der Schlauch 4, der zum Ausformen des Rohrabschnitts 4 durch Blasformen vorgesehen ist, aus einer vertikal oberhalb der Blasform 44 vorgesehenen Extrusionsvorrichtung (nicht dargestellt) in die Kavität 50 der Blasform 44 und einen Aufnahmebereich 51 der Verbindungseinrichtung 45 eingebracht werden.

Zur besseren Nachvollziehbarkeit der nachstehenden Ausführungen werden eine axiale Richtung a und eine radiale Richtung r eingeführt, wobei die axiale Richtung a entlang einer Längsachse L des Rohrabschnitts 4 bzw. des Schlauchs 4 orientiert ist, während die radiale Richtung r sich quer dazu erstreckt. Die Blasform 44 ist zur Verbesserung der Übersichtlichkeit der nachstehenden Darstellungen lediglich in Fig. 4A angedeutet.

In Fig. 4B sind die Werkzeughälften 46, 48 der Verbindungseinrichtung 45 in eine zweite Position bewegt worden, sodass sich der Schlauch 4 zumindest teilweise an die jeweilige Innenkontur der Werkzeughälften 46, 48 angelegt hat.

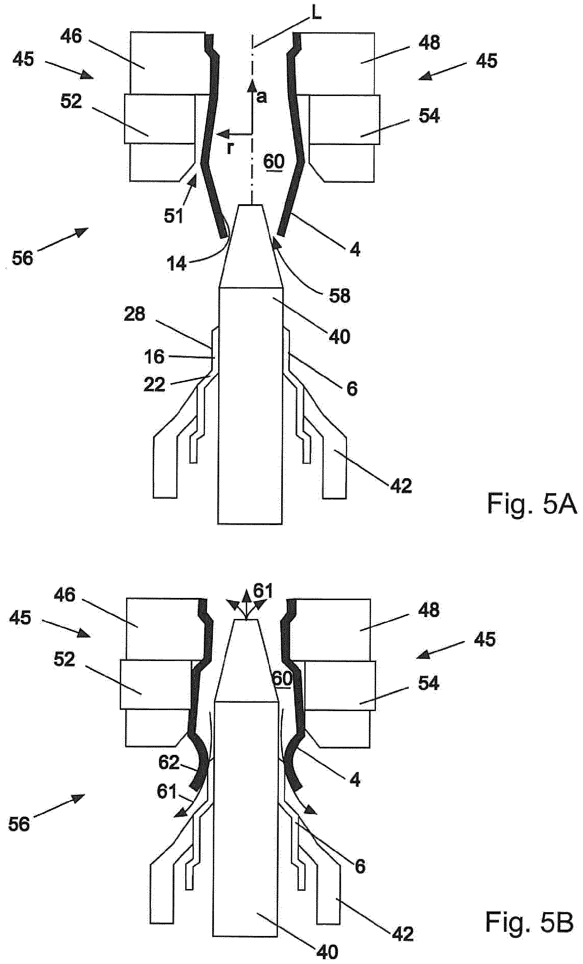

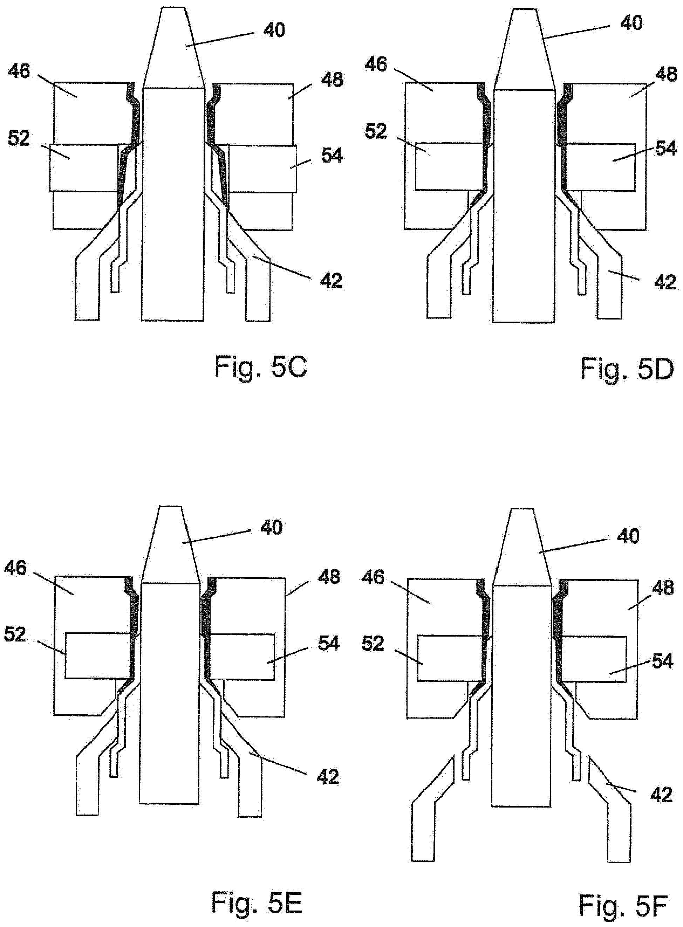

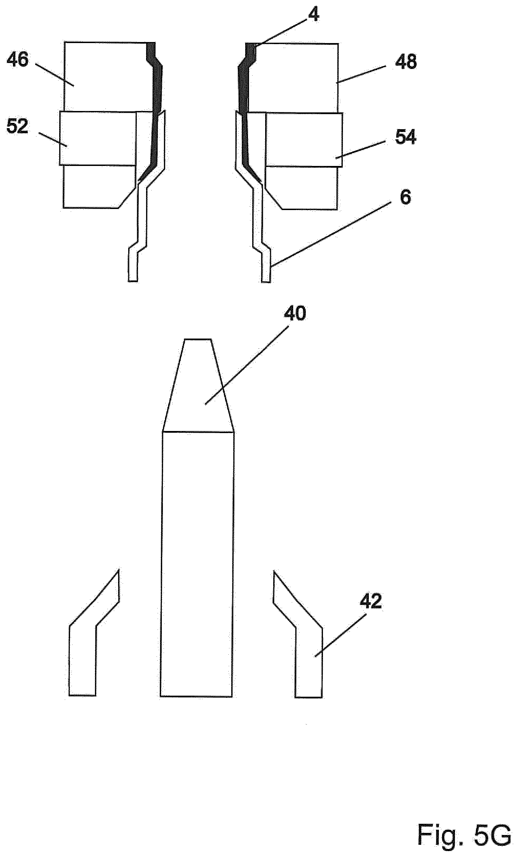

In den Figuren 5A bis 5G ist eine erfindungsgemäße Vorrichtung 56 zum Herstellen des Einfüllrohrs 2 mithilfe des gegenständlichen Verfahrens dargestellt. Es versteht sich, dass in Fig. 4 und Fig. 5 lediglich der unmittelbar dem Adapter 6 und der Verbindungseinrichtung 45 zugeordnete Endabschnitt des Rohrabschnitts 4 dargestellt wird, während sich der Rohrabschnitt 4, wie in Fig. 1A gezeigt, in einer wenigstens in zwei Raumrichtungen gekrümmten Form bis zu einem Endabschnitt 8, der in den Figuren 4 und 5 nicht dargestellt ist, innerhalb der Kavität 50 der Blasform 44 fortsetzt.

Die Vorrichtung 56 umfasst die Verbindungseinrichtung 45, die an der Blasform (nicht dargestellt) befestigt ist, den Blasdorn 40, der zur Aufnahme des Adapters 6 dient, die Schiebereinsätze 52, 54 und das zweiteilige Schneidwerkzeug 42, das aus zwei Halbschalen gebildet ist. Die Schiebereinsätze 52, 54, die Werkzeughälften 46, 48 und der Blasdorn 40 bilden zusammen die Verbindungseinrichtung 45 zum stoffschlüssigen Verbinden des Adapters 6 mit dem Rohrabschnitt 4. Zusätzlich zu den vorgenannten Elementen kann die Verbindungseinrichtung 45 eine Energie- oder Wärmequelle (nicht dargestellt) aufweisen, die zum Plastifizieren eines Bereichs 30 des Adapters, bzw. des Materials der Mantelfläche 28, dient.

Nachfolgend wird ein erfindungsgemäßes Verfahren anhand der Figuren 5A bis 5G näher beschrieben.

Zunächst wird der Blasdorn 40 zusammen mit dem Adapter 6 und dem Schneidwerkzeug 42, dessen Halbschalen den Adapter 6 umfangsseitig umgreifen, axial entlang der Richtung a bewegt (Fig. 5A). Der Blasdorn 40 und der Adapter 6 werden dabei in eine stirnseitige Öffnung 58 des Schlauchs 4 eingeführt, bis der Adapter 6 und der Rohrabschnitt 4 in den Abschnitten 16 und 22 des Adapters 6 überlappen (Fig. 5C).

Während des stirnseitigen Einführens von Blasdorn 40 und Adapter 6 in den Schlauch 4 wird über den Blasdorn 40 Druckluft in das Innere 60 des Schlauchs 4 eingeleitet, um eine Luftströmung 61 zwischen dem Schlauch 4 und dem Adapter 6 bzw. dem Blasdorn zu erzeugen (Fig. 5A, Fig 5B). Auf diese Weise wird eine Aufweitung bzw. Auftulpung der stirnseitigen Öffnung 58 zugeordneten Endbereichs 62 des Schlauchs 4 erreicht, so dass ein Anhaften des Schlauchs 4 an dem Blasdorn 40 oder dem Adapter 6 während dieser axialen Relativbewegung vermieden wird. Vorliegend wird die Druckluft über einen in den Blasdorn 40 integrierten Kanal (nicht dargestellt) zugeführt. Gemäß alternativen Ausführungsformen der Erfindung kann ebenfalls vorgesehen sein, dass es sich bei dem Dorn 40 lediglich um einen Kalibrierdorn handelt, der keine Mittel zum Durchleiten oder Zuführen von Druckluft umfasst, sodass in diesem Fall die Druckluft von einem entgegengesetzt angeordneten, einem dem Adapter 6 abgewandten Ende 8 des Rohrabschnitts 4 zugeordneten Blasdorn zugeführt wird.

Sobald die axiale Relativbewegung beendet ist (Fig. 5C), ist der Innenraum 60 des Schlauchs 4 zur Umgebung hin abgedichtet, sodass sich der Schlauch 4 aufgrund des Innendrucks im Wesentlichen vollständig an die innere Kontur der Werkzeughälften 46, 48 anlegt und in der Kavität 50 der Blasform 44 der Rohrabschnitt 4 aus dem Schlauch 4 geformt wird.

Die einander zugewandten Mantelflächen 14, 28 von Rohrabschnitt 4 und Adapter 6 werden durch ein radiales Zufahren der Schiebereinsätze 52, 54 aneinandergedrückt. Bevorzugt weist die Mantelfläche 28 des Adapters entsprechend der Darstellung gemäß Fig. 2B im Bereich der Mantelfläche 28 modifiziertes HDPE auf, das vor dem Andrücken durch einen Wärmeeintrag zumindest teilweise plastifiziert bzw. aufgeschmolzen worden ist. Die innere Mantelfläche 14 des Rohrabschnitts 4 befindet sich durch den vorgeschalteten Extrusionsprozess noch im zumindest teilweise plastifizierten bzw. aufgeschmolzenen Zustand.

Durch das Aneinanderdrücken des Rohrabschnitts 4 und des Adapters 6 im Bereich der zu verbindenden Mantelflächen 14, 28 werden der Adapter 6 und der Rohrabschnitt 4 miteinander verschweißt und damit unlösbar stoffschlüssig miteinander verbunden. Die stoffschlüssige Verbindung ist sowohl in dem zylindrischen Abschnitt 16 als auch in dem konischen Abschnitt 22 gebildet. Überschüssiges Material des Rohrabschnitts wird durch das Schneidwerkzeug 42 abgetrennt.

Nach dem Andrücken von Rohrabschnitt 4 und Adapter 6 werden das Schneidwerkzeug 42 und der Blasdorn 40 aus dem Bereich der Verbindungseinrichtung 45 bewegt (Fig. 5D bis Fig. 5G).

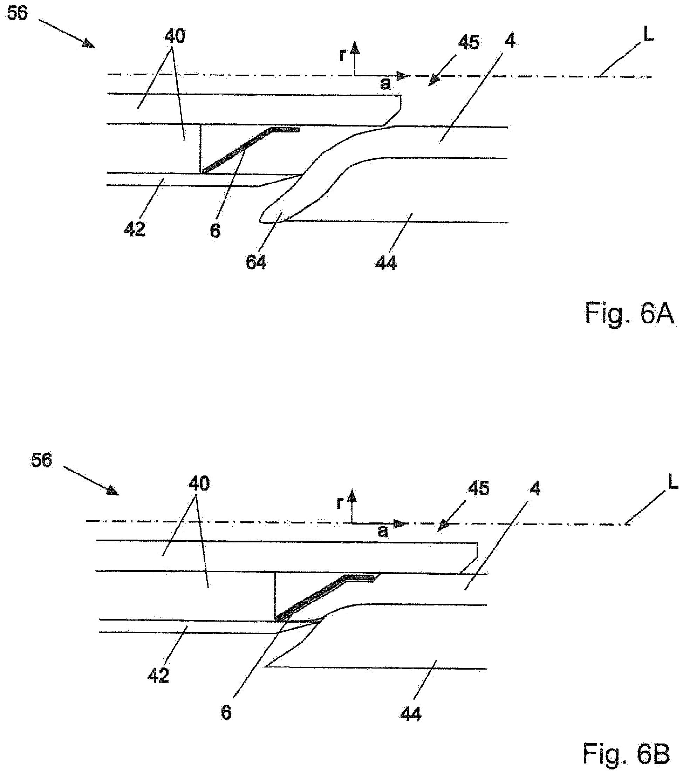

Die Figuren 6A und 6B zeigen in einem Ausschnitt das Zusammenwirken von Blasdorn 40, Schneidwerkzeug 42 und Blasform 44 gemäß einer alternativen Ausgestaltung einer Vorrichtung 56 zum Herstellen eines Einfüllrohrs 2 für einen Kraftstofftank. Bei dieser Ausgestaltung der Vorrichtung 56 erfolgt das Verbinden bzw. Andrücken zwischen dem Adapter 6 und dem Rohrabschnitt 4 durch eine axiale Relativbewegung des Blasdorns 40 aus einer ersten Position (Fig. 6A) in Richtung des Blaswerkzeugs 44 in eine zweite Position (Fig. 6B). Die Verbindungseinrichtung 45 ist daher vorliegend durch die Blasform 44 und den Blasdorn 40 gebildet.

Überschüssiges Rohrmaterial 64 (Butzen) wird mithilfe des Schneidwerkzeugs 42 abgetrennt. Die Verbindung von Adapter 6 und Rohrabschnitt 4 kann so ohne zusätzliche Schiebereinsätze realisiert werden.

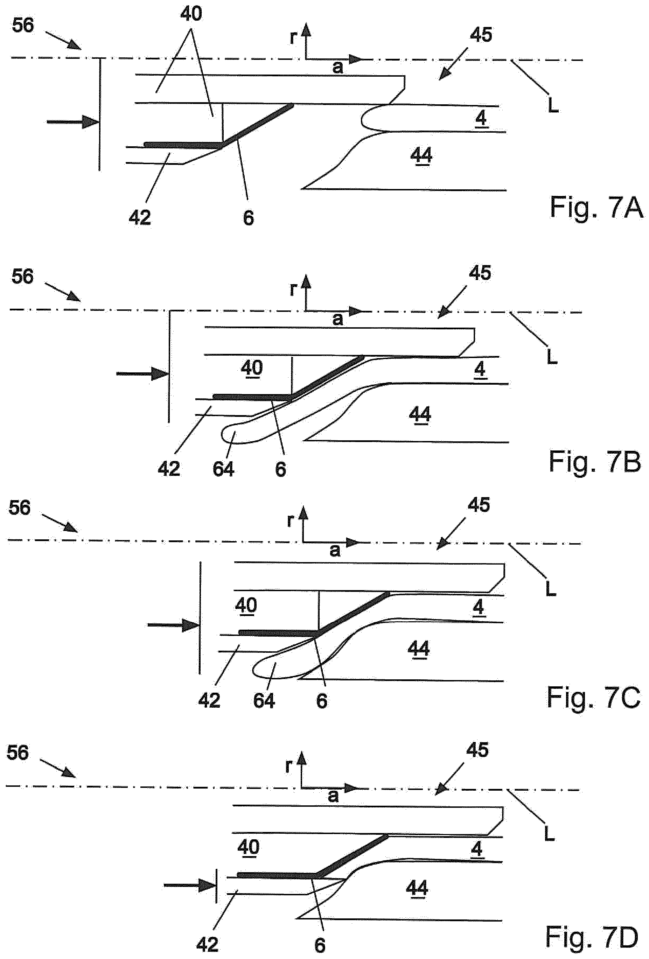

Die Figuren 7A bis 7D zeigen in einem Ausschnitt das Zusammenwirken von Blasdorn 40, Schneidwerkzeug 42 und Blasform 44 gemäß einer weiteren alternativen Ausgestaltung einer Vorrichtung 56 zum Herstellen eines Einfüllrohrs 2 für einen Kraftstofftank. Die Verbindungseinrichtung 45 ist durch die Blasform 44 und den Blasdorn 40 gebildet.

In einem ersten Schritt (Fig. 7A) wird der Blasdorn 40 in eine stirnseitige Öffnung des Schlauchs 4 eingeführt. Auf dem Blasdorn 40 sitzt dabei der Adapter 6, der eine zu den Figuren 6A und 6B abweichende Form aufweist, und in Richtung des Schlauchs 4 endseitig konisch verjüngt ist. Über den Blasdorn 40 wird der Schlauch 4 mit einem Innendruck beaufschlagt. Der links in den Figuren 7A bis 7D dargestellte Pfeil deutet jeweils die Einrückbewegung von Blasdorn 40, Adapter 6 und Schneidwerkzeug 42 an.

In einem zweiten Schritt (Fig. 7B) rückt der Blasdorn 40 zusammen mit dem Adapter 6 und dem Schneidwerkzeug 42 weiter in das Blaswerkzeug 44 ein und wird mit dem Schlauch 4 bzw. dem Rohrabschnitt 4 in Anlage gebracht. Das Schlauchmaterial ist ausgehend von der in Fig. 7A dargestellten Position durch die Innendruckbeaufschlagung teilweise aus dem Blaswerkzeug 44 herausgedrückt worden bzw. herausgeflossen.

Wie in Fig. 7C zu erkennen, werden der Adapter 6 und der noch plastische Rohrabschnitt 4 zwischen dem Blasdorn 40 und dem Blaswerkzeug 44 aneinandergedrückt.

In einem letzten Schritt (Fig. 7D) wird das Schneidwerkzeug 42 in Richtung des Blaswerkzeugs 44 bewegt und mit diesem in Anlage gebracht, um überschüssiges Rohrmaterial 64 abzutrennen.

### Bezugszeichenliste

- 2: Einfüllrohr
- 4: Rohrabschnitt, Schlauch
- 6: Adapter
- 8: Endabschnitt
- 10: Bereich
- 12: Mantelfläche des Adapters 6
- 14: Mantelfläche des Rohrabschnitts 4
- 16: Abschnitt mit Durchmesser D1
- 18: Abschnitt mit Durchmesser D2
- 20: Abschnitt mit Durchmesser D3
- 22: konischer Abschnitt
- 24: konischer Abschnitt
- 26: innere Mantelfläche
- 28: äußere Mantelfläche
- 30: erster Bereich
- 32: zweiter Bereich
- 36: Formelemente, Nut
- 40: Blasdorn
- 42: Schneidwerkzeug
- 44: Blasform
- 45: Verbindungseinrichtung
- 46: Werkzeughälfte
- 48: Werkzeughälfte
- 50: Kavität
- 51: Aufnahmebereich
- 52: Schiebereinsatz
- 54: Schiebereinsatz
- 56: Vorrichtung
- 58: stirnseitige Öffnung
- 60: Innere des Schlauchs 4
- 61: Luftströmung
- 62: Endbereich des Schlauchs 4
- 64: Überschüssiges Rohrmaterial
- B1: Wanddicke des Adapters 6 aus Fig. 2A
- B2: Wanddicke des Adapters 6 aus Fig. 2B
- L: Längsachse
- r: radiale Richtung
- a: axiale Richtung

## Patentansprüche

1. Einfüllrohr für einen Kraftstofftank, mit
- einem Rohrabschnitt (4) aus Kunststoff und
- einem mit dem Rohrabschnitt (4) verbundenen, rohrförmigen Adapter (6) zur Kopplung des Einfüllrohrs (2) mit dem Kraftstofftank, wobei
- eine Mantelfläche (12, 28) des Adapters (6) stoffschlüssig mit einer Mantelfläche (14) des Rohrabschnitts (4) verschweißt ist, wobei
- der Adapter (6) und der Rohrabschnitt (4) im Bereich der stoffschlüssigen Verbindung überlappend angeordnet sind,
**dadurch gekennzeichnet, dass**
- der Adapter (6) aus wenigstens zwei Werkstoffkomponenten hergestellt ist, wobei die eine Komponente zur strukturellen Aussteifung des Adapters vorgesehen ist und die zweite Komponente zum Ausbilden der stoffschlüssigen Verbindung mit dem Rohrabschnitt vorgesehen ist und
- wobei die Mantelfläche (12, 28) des Adapters (6) im Bereich der stoffschlüssigen Verbindung aus einem mit dem Kunststoff des Rohrabschnitts (4) verschweißbaren Kunststoff gebildet ist.

2. Einfüllrohr nach Anspruch 1,
**dadurch gekennzeichnet, dass** der Rohrabschnitt (4) den Adapter (6) im Bereich der stoffschlüssigen Verbindung umfangsseitig umschließt.

3. Einfüllrohr nach einem der Ansprüche 1 oder 2,
wobei
- ein Grundkörper (32) des Adapters (6) aus einem Metall oder einem Kunststoff, insbesondere faserverstärktem Kunststoff, hergestellt ist.

4. Einfüllrohr nach einem der voranstehenden Ansprüche,
**dadurch gekennzeichnet, dass** der Adapter (6) und der Rohrabschnitt (4) im Bereich der stoffschlüssigen Verbindung eine kreiszylindrische und/oder eine konische Form aufweisen.

5. Einfüllrohr nach einem der voranstehenden Ansprüche, **dadurch gekennzeichnet, dass** der Adapter (6)
- in einem Längsschnitt zumindest abschnittsweise
- einen konischen Querschnitt hat, und/oder
- nach Art eines Stufenzylinders geformt ist und/oder
- zumindest abschnittsweise zylindrisch geformt ist und/oder
- in einem dem Rohrabschnitt (4) abgewandten Bereich einen größeren Querschnitt aufweist als im Bereich der stoffschlüssigen Verbindung und/oder
- wenigstens eine stirnseitige Fase aufweist.

6. Tanksystem für ein Kraftfahrzeug, mit
- einem Kraftstofftank und
- einem Einfüllrohr (2) nach einem der voranstehenden Ansprüche, wobei der Adapter (6) lösbar mit dem Kraftstofftank verbunden ist.

7. Verfahren zum Herstellen eines Einfüllrohrs für einen Kraftstofftank, mit den Verfahrensschritten:
a) Bereitstellen eines Rohrabschnitts (4) aus Kunststoff durch:
- Extrudieren eines Kunststoffschlauchs (4), der zum Ausformen des Rohrabschnitts (4) durch Blasformen vorgesehen ist;
- Einbringen des Kunststoffschlauchs (4) in eine Kavität (50) eines Werkzeugs (44) zum Blasformen;
- Vorformen des Rohrabschnitts (4), insbesondere durch Schließen des Werkzeugs (44) und/oder Beaufschlagung des Schlauchinneren (60) mit einem Innendruck, wobei sich der Schlauch (4) zumindest abschnittsweise an das Werkzeug (44) anlegt;
b) Bereitstellen eines rohrförmigen Adapters (6), der zur Anbindung des Einfüllrohrs (2) an den Kraftstofftank vorgesehen ist;
c) Verbinden des Adapters (6) mit dem Rohrabschnitt (4) mittels einer Verbindungseinrichtung (40, 44, 45, 46, 48, 52, 54), wobei
- eine Mantelfläche (12, 28) des Adapters (6) stoffschlüssig mit einer Mantelfläche (14) des Rohrabschnitts (4) verschweißt wird, wobei
- der Adapter (6) und der Rohrabschnitt (4) im Bereich der stoffschlüssigen Verbindung überlappend angeordnet sind,
**dadurch gekennzeichnet, dass** im Schritt b) der Schritt
- Positionieren des Adapters (6) auf einem Blas- und Kalibrierdorn (40), und Einführen des Blas- und Kalibrierdorns (40) und des Adapters (6) in eine stirnseitige Öffnung (58) des Rohrabschnitts (4) durchgeführt wird.

8. Verfahren nach Anspruch 7,
**dadurch gekennzeichnet, dass** während des Einführens des Adapters (6) in den Rohrabschnitt (4) eine Fluidströmung zwischen den zu verbindenden Mantelflächen (12, 14, 28) erzeugt wird, um einen Spalt, insbesondere einen Luftspalt, zwischen den Mantelflächen (12, 14, 28) auszubilden.

9. Verfahren nach einem der Ansprüche 7 bis 8,
**dadurch gekennzeichnet, dass** im Verfahrensschritt c) die Schritte
- Plastifizieren wenigstens einer der Mantelflächen (12, 14, 28) durch Energieeintrag; und
- Andrücken der Mantelfläche (12, 28) des Adapters an die Mantelfläche (14) des Rohrabschnitts (4), oder umgekehrt
durchgeführt werden.

10. Verfahren nach Anspruch 9,
**dadurch gekennzeichnet, dass** der Adapter (6) und der Rohrabschnitt (4) durch radiales Zufahren wenigstens zweier Schiebereinsätze (52, 54), die Teil der Verbindungseinrichtung (40, 44, 45, 46, 48, 52, 54) sind, aneinandergedrückt werden, wobei der Adapter (6) auf einem Blas- und Kalibrierdorn (40), gehalten ist, so dass der Adapter (6) und der Rohrabschnitt (4) zwischen den Schiebereinsätzen (52, 54) und dem Blas- und Kalibrierdorn (40) radial aneinandergedrückt werden.

11. Verfahren nach einem der Ansprüche 7 bis 10,
**dadurch gekennzeichnet, dass** die Schritte
- Bereitstellen eines den Adapter (6) umfangsseitig umgreifenden Schneidwerkzeugs (42); und
- Abtrennen von überschüssigem Rohrmaterial mittels des Schneidwerkzeugs (42) durchgeführt werden.

12. Vorrichtung zum Herstellen eines Einfüllrohrs für einen Kraftstofftank, mit
- einem Werkzeug (44), das eine Kavität (50) zum Blasformen eines Rohrabschnitts (4) aus Kunststoff aufweist, und
- einer Aufnahme (40) zum Halten eines zur Kopplung des Einfüllrohrs (2) mit dem Kraftstofftank vorgesehenen, rohrförmigen Adapters (6),
**dadurch gekennzeichnet, dass**
- eine Verbindungseinrichtung (40, 44, 45, 46, 48, 52, 54) zum stoffschlüssigen Verbinden des Adapters (6) mit dem Rohrabschnitt (4) vorgesehen ist, die dazu ausgebildet ist,
- eine Mantelfläche (12, 28) des Adapters stoffschlüssig mit einer Mantelfläche (14) des Rohrabschnitts (4) zu verschweißen, wobei
- der Adapter (6) und der Rohrabschnitt (4) im Bereich der stoffschlüssigen Verbindung überlappend angeordnet sind, wobei
- die Verbindungseinrichtung (40, 44, 45, 46, 48, 52, 54) wenigstens zwei Schiebereinsätze (52, 54) zum Andrücken des Rohrabschnitts (4) an den Adapter (6), oder umgekehrt, aufweist,
**dadurch gekennzeichnet, dass**
die Verbindungseinrichtung (40, 44, 45, 46, 48, 52, 54) einen Blas- und Kalibrierdorn (40) zur Aufnahme des Adapters (6) aufweist.

13. Vorrichtung nach Anspruch 12,
**dadurch gekennzeichnet, dass** ein Schneidwerkzeug (42) zum Abtrennen von überschüssigem Rohrmaterial vorgesehen ist.

14. Vorrichtung nach Anspruch 13,
**dadurch gekennzeichnet, dass** das Schneidwerkzeug (42) eine Haltefläche, die zur umfangsseitigen Anlage an dem Adapter (6) vorgesehen ist, und eine Trennfläche, die zur Anlage an der Verbindungseinrichtung (40, 44, 45, 46, 48, 52, 54) vorgesehen ist, aufweist.

## Claims

1. A filler tube for a fuel tank, having
- a tube portion (4) composed of plastic and
- a tubular adapter (6) which is connected to the tube portion (4) and which serves for the coupling of the filler tube (2) to the fuel tank, whereas
- a lateral surface (12, 28) of the adapter (6) is integrally bounded by welding, to a lateral surface (14) of the tube portion (4), wherein
- the adapter (6) and the tube portion (4) are arranged so as to overlap in the region of the integrally bonded connection,
**characterized in that**
- the adapter (6) is produced from at least two material components, whereas one component is provided for structurally stiffening the adapter and the second component is provided for forming the integrally bonded connection to the tube portion, and
- the lateral surface (12, 28) of the adapter (6) is, in the region of the integrally bonded connection, formed from a plastic which is weldable to the plastic of the tube portion (4).

2. The filler tube as claimed in claim 1,
**characterized in that** the tube portion (4) circumferentially encloses the adapter (6) in the region of the integrally bonded connection.

3. The filler tube as claimed in claim 1 or 2, whereas
- a main body (32) of the adapter (6) is produced from a metal or a plastic, in particular fiber-reinforced plastic.

4. The filler tube as claimed in any of the preceding claims, **characterized in that** the adapter (6) and the tube portion (4) have, in the region of the integrally bonded connection, a circular cylindrical and/or a conical shape.

5. The filler tube as claimed in any of the preceding claims, **characterized in that** the adapter (6),
- at least in portions in a longitudinal section,
- has a conical cross section,
and/or
- is shaped in the manner of a stepped cylinder,
and/or
- is of cylindrical shape at least in portions,
and/or
- has a larger cross section in a region averted from the tube portion (4) than in the region of the integrally bonded connection,
and/or
- has at least one end-side bevel.

6. A tank system for a motor vehicle, having
- a fuel tank and
- a filler tube (2) as claimed in any of the preceding claims, wherein the adapter (6) is detachably connected to the fuel tank.

7. A method for producing a filler tube for a fuel tank, having the method steps:
a) providing a tube portion (4) composed of plastic by:
- extruding a plastics hose (4) which is provided for the formation of the tube portion (4) by blow molding;
- introducing the plastics hose (4) into a cavity (50) of a tool (44) for the blow molding;
- pre-forming the tube portion (4), in particular by closing the tool (44) and/or applying an internal pressure to the hose interior (60), wherein the hose (4) lies, at least in portions, against the tool (44);
b) providing a tubular adapter (6) which is provided for the connection of the filler tube (2) to the fuel tank;
c) connecting the adapter (6) to the tube portion (4) by means of a connecting device (40, 44, 45, 46, 48, 52, 54), wherein
- a lateral surface (12, 28) of the adapter (6) is integrally bounded by welding, to a lateral surface (14) of the tube portion (4), wherein
- the adapter (6) and the tube portion (4) are arranged so as to overlap in the region of the integrally bonded connection, **characterized in that** in step b), the step positioning the adapter (6) on a blow and calibrating pin (40) and inserting the blow and calibrating pin (40) and the adapter (6) into an end-side opening (58) of the tube portion (4) is carried out.

8. The method as claimed in claim 7,
**characterized in that,** during the insertion of the adapter (6) into the tube portion (4), a fluid flow between the lateral surfaces (12, 14, 28) to be connected is generated in order to form a gap, in particular an air gap, between the lateral surfaces (12, 14, 28).

9. The method as claimed in any of claims 7 to 8,
**characterized in that,** in method step c), the steps
- plasticizing at least one of the lateral surfaces (12, 14, 28) by means of an introduction of energy and
- pressing the lateral surface (12, 28) of the adapter against the lateral surface (14) of the tube portion (4), or vice versa are performed.

10. The method as claimed in claim 9,
**characterized in that** the adapter (6) and the tube portion (4) are pressed against one another by radial advancement of at least two slide inserts (52, 54) which are part of the connecting device (40, 44, 45, 46, 48, 52, 54), wherein the adapter (6) is held on a blow and calibrating pin (40), so that the adapter (6) and the tube portion (4) are pressed radially against one another between the slide inserts (52, 54) and the blow and calibrating pin (40).

11. The method as claimed in any of claims 7 to 10,
**characterized in that** the steps
- providing a cutting tool (42) which circumferentially engages around the adapter (6); and
- separating off excess tube material by means of the cutting tool (42)
are carried out.

12. An apparatus for producing a filler tube for a fuel tank, having
- a tool (44) which has a cavity (50) for the blow molding of a tube portion (4) from plastic, and
- a receptacle (40) for holding a tubular adapter (6) which is provided for the coupling of the filler tube (2) to the fuel tank,
**characterized in that**
- a connecting device (40, 44, 45, 46, 48, 52, 54) for the integrally bonded connection of the adapter (6) to the tube portion (4) is provided, which connecting device is adapted
- to connect the lateral surface (12, 28) of the adapter by welding to a lateral surface (14) of the tube portion (4), wherein
- the adapter (6) and the tube portion (4) are arranged so as to overlap in the region of the integrally bonded connection, wherein
- the connecting device (40, 44, 45, 46, 48, 52, 54) has least two slide inserts (52, 54) for pressing the tube portion (4) against the adapter (6), or vice versa,
**characterized in that**
the connecting device (40, 44, 45, 46, 48, 52, 54) has a blow and calibrating pin (40) for receiving the adapter (6).

13. The apparatus as claimed in claim 12,
**characterized in that** a cutting tool (42) for separating off excess tube material is provided.

14. The apparatus as claimed in claim 13,
**characterized in that** the cutting tool (42) has a holding surface, which is provided for circumferential abutment against the adapter (6), and a separating surface, which is provided for abutment against the connecting device (40, 44, 45, 46, 48, 52, 54) .

## Revendications

1. Tubulure de remplissage destinée à un réservoir de carburant, comportant
- une section de tubulure (4) en plastique, et
- un adaptateur tubulaire (6) relié à la section de tubulure (4) pour accoupler la tubulure de remplissage (2) au réservoir de carburant,
- une surface externe (12, 28) de l'adaptateur (6) étant soudée par liaison de matière à une surface externe (14) de la section de tubulure (4),
- l'adaptateur (6) et la section de tubulure (4) étant disposés de manière à se chevaucher dans la zone du raccordement par liaison de matière,
**caractérisée en ce que**
- l'adaptateur (6) est fabriqué à partir d'au moins deux composants de matériau, l'un des composants étant prévu pour le renforcement structural de l'adaptateur et le second composant étant prévu pour créer le raccordement par liaison de matière avec la section de tubulure, et
- la surface externe (12, 28) de l'adaptateur (6) dans la zone du raccordement par liaison de matière étant formée à partir d'un plastique pouvant être soudé avec le plastique de la section de tubulure (4).

2. Tubulure de remplissage selon la revendication 1,
**caractérisée en ce que** la section de tubulure (4) entoure
circonférentiellement l'adaptateur (6) dans la zone du raccordement par liaison de matière.

3. Tubulure de remplissage selon l'une des revendications 1 ou 2,
- un corps de base (32) de l'adaptateur (6) étant fabriqué en métal ou en plastique, en particulier en plastique renforcé par des fibres.

4. Tubulure de remplissage selon l'une des revendications précédentes,
**caractérisée en ce que** l'adaptateur (6) et la section de tubulure (4) présentent une forme cylindrique circulaire et/ou conique dans la zone du raccordement par liaison de matière.

5. Tubulure de remplissage selon l'une des revendications précédentes, **caractérisée en ce que** l'adaptateur (6)
- comporte en coupe longitudinale, au moins sur certaines sections,
- une section transversale conique, et/ou
- est réalisé sous la forme d'un cylindre étagé, et/ou
- est réalisé de façon cylindrique au moins sur certaines sections, et/ou
- présente, dans une zone opposée à la section de tubulure (4), une section transversale plus grande que celle dans la zone du raccordement par liaison de matière, et/ou
- présente au moins un chanfrein frontal.

6. Système de réservoir destiné à un véhicule automobile, comportant
- un réservoir de carburant, et
- une tubulure de remplissage (2) selon l'une des revendications précédentes, l'adaptateur (6) étant relié de manière amovible au réservoir de carburant.

7. Procédé de fabrication d'une tubulure de remplissage destinée à un réservoir de carburant, comportant les étapes de procédé :
a) de mise à disposition d'une section de tubulure (4) en plastique par :
- extrusion d'un tuyau en plastique (4) qui est prévu pour le façonnage de la section de tubulure (4) par moulage par soufflage ;
- introduction du tuyau en plastique (4) dans une cavité (50) d'un outil (44) pour le moulage par soufflage ;
- préformage de la section de tubulure (4), en particulier en fermant l'outil (44) et/ou en soumettant l'intérieur (60) du tuyau à une pression interne, le tuyau (4) reposant au moins sur certaines sections contre l'outil (44) ;
b) de mise à disposition d'un adaptateur tubulaire (6) qui est prévu pour relier la tubulure de remplissage (2) au réservoir de carburant ;
c) de raccordement de l'adaptateur (6) à la section de tubulure (4) à l'aide d'un moyen de raccordement (40, 44, 45, 46, 48, 52, 54),
- une surface externe (12, 28) de l'adaptateur (6) étant soudée par liaison de matière à une surface externe (14) de la section de tubulure (4),
- l'adaptateur (6) et la section de tubulure (4) étant disposés de manière à se chevaucher dans la zone du raccordement par liaison de matière, **caractérisé en ce que** l'étape
- de positionnement de l'adaptateur (6) sur un mandrin de soufflage et de calibrage (40) et d'introduction du mandrin de soufflage et de calibrage (40) et de l'adaptateur (6) dans une ouverture frontale (58) de la section de tubulure (4) est effectuée à l'étape b).

8. Procédé selon la revendication 7,
**caractérisé en ce que,** lors de l'introduction de l'adaptateur (6) dans la section de tubulure (4), un écoulement de fluide est généré entre les surfaces externes (12, 14, 28) à raccorder, afin de créer un espace, en particulier un espace d'air, entre les surfaces externes (12, 14, 28).

9. Procédé selon l'une des revendications 7 à 8,
**caractérisé en ce que** les étapes
- de plastification d'au moins l'une des surfaces externes (12, 14, 28) par apport d'énergie ; et
- de pressage de la surface externe (12, 28) de l'adaptateur contre la surface externe (14) de la section de tubulure (4), ou inversement, sont effectuées à l'étape c) du procédé.

10. Procédé selon la revendication 9,
**caractérisé en ce que** l'adaptateur (6) et la section de tubulure (4) sont pressés l'un contre l'autre en fermant radialement au moins deux inserts coulissants (52, 54) qui font partie du moyen de raccordement (40, 44, 45, 46, 48, 52, 54), l'adaptateur (6) étant maintenu sur un mandrin de soufflage et de calibrage (40) de telle sorte que l'adaptateur (6) et la section de tubulure (4) sont pressés l'un contre l'autre radialement entre les inserts coulissants (52, 54) et le mandrin de soufflage et de calibrage (40).

11. Procédé selon l'une des revendications 7 à 10,
**caractérisé en ce que** les étapes
- de mise à disposition d'un outil de coupe (42) entourant l'adaptateur (6) circonférentiellement ; et
- de séparation du matériau de tubulure en excès sont effectuées à l'aide de l'outil de coupe (42).

12. Dispositif de fabrication d'une tubulure de remplissage destinée à un réservoir de carburant, comportant
- un outil (44) qui présente une cavité (50) destinée au moulage par soufflage d'une section de tubulure (4) en plastique, et
- un logement (40) destiné à contenir un adaptateur tubulaire (6) prévu pour accoupler la tubulure de remplissage (2) au réservoir de carburant,
**caractérisé en ce**
- **qu'**un moyen de raccordement (40, 44, 45, 46, 48, 52, 54) est prévu pour raccorder par liaison de matière l'adaptateur (6) à la section de tubulure (4), lequel moyen de raccordement est conçu
- pour souder une surface externe (12, 28) de l'adaptateur par liaison de matière à une surface externe (14) de la section de tubulure (4),
- l'adaptateur (6) et la section de tubulure (4) étant disposés de manière à se chevaucher dans la zone du raccordement par liaison de matière,
- le moyen de raccordement (40, 44, 45, 46, 48, 52, 54) présentant au moins deux inserts coulissants (52, 54) destinés à presser la section de tubulure (4) contre l'adaptateur (6), ou inversement,
**caractérisé en ce que**
le moyen de raccordement (40, 44, 45, 46, 48, 52, 54) présente un mandrin de soufflage et de calibrage (40) destiné à loger l'adaptateur (6).

13. Dispositif selon la revendication 12,
**caractérisé en ce qu'**un outil de coupe (42) est prévu pour séparer le matériau de tubulure en excès.

14. Dispositif selon la revendication 13,
**caractérisé en ce que** l'outil de coupe (42) présente une surface de maintien qui est prévue pour le contact périphérique avec l'adaptateur (6), et une surface de séparation qui est prévue pour le contact avec le moyen de raccordement (40, 44, 45, 46, 48, 52, 54).
